# EUROPEAN PATENT APPLICATION

(11) **EP 3 618 433 A1**
(43) Date of publication of application: **04.03.2020**
(21) Application number: 18791586.3
(22) Date of filing: 24.04.2018
(51) Int. Cl.: H04N 17/00, H04N 5/225

(54) **MODULE INFORMATION STORAGE METHOD, MODULE INFORMATION RETRIEVAL METHOD, MODULE INFORMATION STORAGE DEVICE AND TEST APPARATUS**

(30) Priority: 26.04.2017 CN 201710282386
(71) Applicant: Ningbo Sunny Opotech Co., Ltd., Ningbo, Zhejiang 315400 (CN)
(72) Inventor: WANG, Mingzhu, Ningbo Zhejiang 315400 (CN); WANG, Bin, Ningbo Zhejiang 315400 (CN); GAO, Quan, Ningbo Zhejiang 315400 (CN); LU, Yande, Ningbo Zhejiang 315400 (CN); YAO, Lifeng, Ningbo Zhejiang 315400 (CN)
(74) Representative: Gong, Jinping
(86) International application number: PCT/CN2018/084213
(87) International publication number: WO 2018/196735

(57) **Abstract**

The present invention provides a module information storage method, a module information retrieval method, a module information storage apparatus and a test device. The module information storage method comprises: generating a main container in an array form by associating identification information of a spliced test board with identification information of the main container; generating a plurality of sub-containers by associating identification information of each camera module with identification information of each sub-container; storing module information of each camera module in a corresponding sub-container; and inserting the respective sub-container into a corresponding position in the main container, the module information including test data of a plurality of camera modules arranged in a matrix form included in a spliced test board obtained by testing the plurality of camera modules. With the module information storage method, the module information retrieval method, the module information storage apparatus, and the test device according to the present invention, storage and retrieval of data of the batch test of the camera modules can be realized.

## Description

### Technical field

The present invention relates to the field of data storage, and in particular to a module information storage method for storing data of a batch test of camera modules, a module information retrieval method, a module information storage apparatus and a test device.

### Technical background

With the development of smart devices, more and more smart devices are inseparable from an image acquisition function. Moreover, high-performance video camera and static camera functions are pursued by the market. For example, smartphones, laptops, smart wearable devices and the like are all developing toward higher-performance camera functions. Performance indicators are also constantly updated as the market changes. These miniature camera applications are inseparable from the use of camera modules.

At present, there are still many unstable factors in the production of the camera modules, and the manufactured camera modules cannot be directly installed in the devices to be used. Then, each camera module needs to be tested with different performance indicators, and for the camera modules that do not meet the requirements, they can not be used. For manufacturers, the yield of the products is very important, and the yield of the shipped products is even more critical. Therefore, in the production of camera modules, all the products are substantially taken for all of the tests. This undoubtedly increases the production costs and reduces the production efficiency.

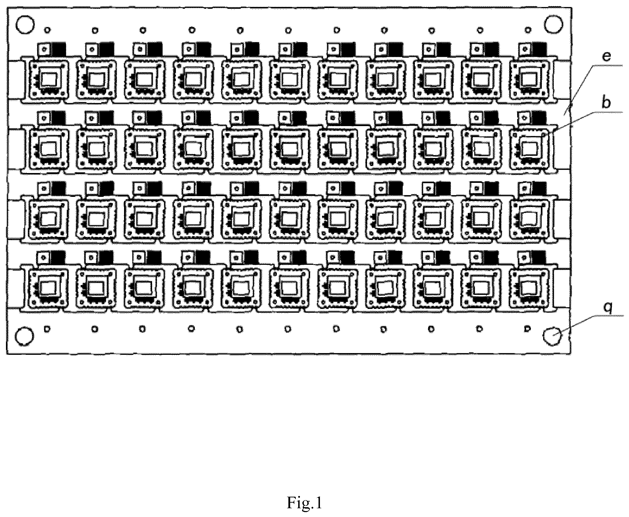

In the conventional production process of the camera modules, each camera module is sequentially taken for various tests. That is to say, for a large amount of products, the tests are carried out separately. However, at present, it also tends to mass production in manufacturing, and the conventional camera module test cannot meet the requirements of mass production. For example, Fig. 1 shows an outline view of a conventional spliced board for assembling camera modules. As shown in Fig. 1, a plurality of identical single printed circuit boards b are splicedly mounted on the spliced board e, and one lens is mounted on each of the printed circuit boards b, so that batch assembly of the camera modules can be realized.

However, how to test various kinds of performance of the camera modules in batches during the test is a problem that one is currently facing. Moreover, how to store batch test data of the camera modules related to a batch test of the camera modules is also a problem that needs to be solved.

### Summary of the invention

An object of the present invention is to provide a module information storage method, a module information retrieval method, a module information storage apparatus, and a test device, which can realize storage of data of a batch test of camera modules.

According to an aspect of the present invention, there is provided a module information storage method, the module information comprising test data of a plurality of camera modules arranged in a matrix form included in a spliced test board obtained by testing the plurality of camera modules, the module information storage method comprising: generating a main container in an array form by associating identification information of the spliced test board with identification information of the main container; generating a plurality of sub-containers by associating identification information of each camera module with identification information of each sub-container; storing module information of each camera module in a corresponding sub-container; and inserting the respective sub-container into a corresponding position in the main container.

In the module information storage method described above, the identification information of the spliced test board is a two-dimensional code of the spliced test board.

In the module information storage method described above, the identification information of the camera module is a FUSEID of the camera module.

In the module information storage method described above, the module information comprises a FUSEID, a test result, and test data of the camera module.

The module information storage method described above further comprises: generating a main container mapping table according to the unique identification information of the main container as a key value by using a key value pair; generating a sub-container mapping table according to the unique identification information of the camera module as a key value; and inserting each sub-container to a specified position according to a matrix position of the main container.

According to another aspect of the present invention, there is provided a module information retrieval method comprising: finding a corresponding position in a main container mapping table according to identification information of a spliced test board, wherein the identification information of the spliced test board is associated with identification information of the main container; finding a position where a sub-container belonging to the main container is located according to identification information of a camera module so as to locate the sub-container, wherein the identification information of the camera module is associated with identification information of the sub-container; and obtaining module information of the corresponding camera module from the sub-container, wherein the module information includes module information of the corresponding camera module among module information of the plurality of camera modes arranged in the matrix form included in the spliced test board obtained by testing the plurality of camera modules.

In the module information retrieval method described above, the identification information of the spliced test board is a two-dimensional code of the spliced test board.

In the module information retrieval method described above, the identification information of the camera module is a FUSEID of the camera module.

According to still another aspect of the present invention, there is provided a module information storage apparatus, the module information comprising test data of a plurality of camera modules arranged in a matrix form included in a spliced test board obtained by testing the plurality of camera modules, the module information storage apparatus comprising: a main container generation unit for generating a main container in an array form by associating identification information of the spliced test board with identification information of the main container; a sub-container generation unit for generating a plurality of sub-containers by associating identification information of each camera module with identification information of each sub-container; an information storage unit for storing module information of each camera module in a corresponding sub-container; and a storage architecture unit for inserting the respective sub-container into a corresponding position in the main container.

In the module information storage apparatus described above, the identification information of the spliced test board is a two-dimensional code of the spliced test board.

In the module information storage apparatus described above, the identification information of the camera module is a FUSEID of the camera module.

In the module information storage apparatus described above, the module information comprises a FUSEID, a test result, and test data of the camera module.

The module information storage apparatus described above further comprises a mapping establishment unit, specifically for: generating a main container mapping table according to the unique identification information of the main container as a key value by using a key value pair; generating a sub-container mapping table according to the unique identification information of the camera module as a key value; and inserting each sub-container to a specified position according to a matrix position of the main container.

According to further another aspect of the present invention, there is provided a test device for obtaining test data of a plurality of camera modules arranged in a matrix form included in a spliced test board obtained by testing the plurality of camera modules, comprising:
a storage component for storing module information of the camera module, comprising:
a main container generation unit for generating a main container in an array form by associating identification information of the spliced test board with identification information of the main container;
a sub-container generation unit for generating a plurality of sub-containers by associating identification information of each camera module with identification information of each sub-container;
an information storage unit for storing module information of each camera module in a corresponding sub-container; and
a storage architecture unit for inserting the respective sub-container into a corresponding position in the main container;
a retrieval component for retrieving the module information, specifically for:
   finding a corresponding position in a main container mapping table according to identification information of a spliced test board, wherein the identification information of the spliced test board is associated with identification information of the main container;
   finding a position where a sub-container belonging to the main container is located according to identification information of a camera module so as to locate the sub-container, wherein the identification information of the camera module is associated with identification information of the sub-container; and
   obtaining module information of the corresponding camera module from the sub-container, wherein the module information includes module information of the corresponding camera module among module information of the plurality of camera modes arranged in the matrix form included in the spliced test board obtained by testing the plurality of camera modules.

In the test device described above, the storage component further comprises a mapping establishment unit, specifically for:
generating a main container mapping table according to the unique identification information of the main container as a key value by using a key value pair;
generating a sub-container mapping table according to the unique identification information of the camera module as a key value; and
inserting each sub-container to a specified position according to a matrix position of the main container;
wherein the retrieval component retrieves the module information based on a mapping table established by the mapping establishment unit.

The module information storage method, the module information retrieval method, the module information storage apparatus, and the test device according to the present invention can realize storage and retrieval of data of the batch test of the camera modules, thereby reducing the personnel input, improving the production efficiency, and reducing the misoperation of personnel.

### Brief description of the drawings

Fig. 1 shows an outline view of a conventional spliced board for assembling camera modules;
Fig. 2 is an overall schematic view showing a spliced test board according to an embodiment of the present invention;
Fig. 3 is an exploded schematic view showing the spliced test board according to the embodiment of the present invention;
Fig. 4 is a structural schematic view of a support plate of the spliced test board according to the embodiment of the present invention;
Fig. 5 is a top view of a medium module disposed on the support plate according to the embodiment of the present invention;
Fig. 6 is a bottom view of a medium module disposed on the support plate according to the embodiment of the present invention;
Fig. 7 is an overall schematic view of the medium module according to the embodiment of the present invention;
Fig. 8 is an overall schematic view of the medium module connected to a camera module according to the embodiment of the present invention;
Fig. 9 is another overall schematic view of the medium module connected to the camera module according to an embodiment of the present invention;
Fig. 10 is a schematic flowchart of a module information storage method according to an embodiment of the present invention;
Fig. 11 is a schematic view of a main-container-sub-container architecture according to the embodiment of the present invention;
Fig. 12 is a schematic flowchart of a module information retrieval method according to an embodiment of the present invention;
Fig. 13 is a schematic block diagram of a module information storage apparatus according to an embodiment of the present invention;
Fig.14 is a schematic block diagram of a testing device according to an embodiment of the present invention; and
Fig. 15 is a schematic diagram of testing a camera module disposed on a spliced test board by the test device according to the embodiment of the present invention.

### Detailed description of the embodiments

The following description is presented to disclose the present invention to enable those skilled in the art to practice the present invention. Preferred embodiments in the following description are by way of example only, and other obvious modifications are conceivable to those skilled in the art. The basic principles of the present invention as defined in the following description may be applied to other embodiments, modifications, improvements, equivalents, and other embodiments without departing from the spirit and scope of the present invention.

It should be understood by those skilled in the art that in the disclosure of the present invention, the orientation or positional relationship indicated by the terms "longitudinal", "transverse", "upper", "lower", "front", "back", "left", "right", "vertical", "horizontal", "top", "bottom", "inside", "outside", etc. is based on the orientation or positional relationship shown in the figures, which is merely for the convenience of describing the present invention and simplifying the description, and does not indicate or imply that the referred apparatus or element must have a particular orientation and be constructed and operated in the particular orientation. Therefore, the above terms cannot be construed as limiting the present invention.

It may be understood that the term "a" / "an" should be understood to mean "at least one" or "one or more", that is, in one embodiment, the number of an element may be one, and in other embodiments, the number of the element may be multiple, and the term "a" / "an" cannot be construed as limiting the number.

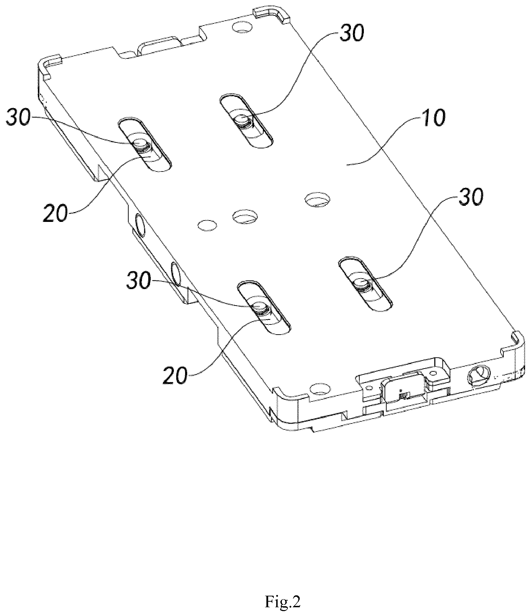

As described above, in order to solve the problem of the batch test of the camera modules, an embodiment of the present invention provides a spliced test board for a camera module to test two or more camera modules. Fig. 2 is an overall schematic view showing a spliced test board according to an embodiment of the present invention. As shown in Fig. 2, the spliced test board includes a board body 10 and a plurality of medium modules 20, wherein the medium module 20 is connected to a camera module 30, and the camera module 30 is a finished product to be tested after the assembly. The camera module 30 is connected to the medium module 20 for performing various performance tests on the camera module 30. The camera module 30 may be connected and detachably fixed to the medium module 20, and the medium module 20 may carry the camera module 30 to perform all test operations. It is worth mentioning that the connection between the medium module 20 and the camera module 30 is one-to-one. That is to say, the camera module 30 may complete all test operations by the medium module 20 without having to repeatedly access and remove with respect to the medium module 20. For example, the camera module 30 to be tested is connected and fixed to the medium module 20 before starting a test operation. The medium module 20 will carry the camera module 30 to perform all of the tests. The medium module 20 will always be connected to the camera module 30 regardless of whether the camera module 30 passes the tests or not. That is to say, for the camera module 30 that has not passed a test, the medium module 20 may also assist the camera module 30 in performing corresponding operations without passing the test. For the camera module 30 that passes the test, the medium module 20 will also accompany the camera module 30 to complete other tests. By means of the medium module 20, the camera module 30 can avoid repeated access and removal during all of the tests, including a flow transfer process, thereby reducing the adverse impacts of the test on the camera module 30, reducing the time required for each camera module 30 to test and improving the overall efficiency of the test.

In addition, the medium module 20 may simultaneously provide a stable connection of the camera module 30 in terms of the structure and electric circuit. The medium module 20 provides a circuit expansion of the camera module 30 for testing requirements, and indirectly causes the camera module 30 to perform various performance tests. Moreover, the camera module 30 may be given a certain protection by the medium module 20, so that the camera module 30 can complete all test operations by means of the medium module 20. Of course, the camera module 30 may be detached from the medium module 20 when needed. For example, after a certain test fails or all of the tests are completed, the camera module 30 may be detached from the medium module 20 after testing, and then the camera module 30 completes the tests. It should be noted that the medium module 20 may be adapted to different types of camera modules 30. Moreover, the medium module 20 is less expensive and does not require complicated processes. In this way, the medium module 20 may repeatedly accompany the camera module 30 for testing, thereby reducing the testing cost. Moreover, the medium module 20 has a high degree of matching for different test items, and the medium module 20 may participate in different test items. For the same camera module 30 to be tested, it is not necessary to replace the connected medium module 20. That is to say, the medium module 20 may carry different types of camera modules 30 for testing. Therefore, for the testing process of the same camera module 30, the camera module 30 and the medium module 20 correspond to each other and need not be replaced. For different types of camera modules 30, the medium module 20 may be adapted, and the medium module 20 may carry different camera modules 30 for testing. For different types of test items, the medium module 20 has extremely high adaptability to a testing device, and can ensure that the camera module 30 effectively completes the test operations.

In addition, the board body 10 provided by the embodiment of the present invention is provided with a plurality of medium modules 20 so that a plurality of camera modules 30 may be tested in testing. Preferably, the board body 10 may be placed with m×n medium modules 20 arranged in an array form, where m and n are integers greater than or equal to 2. The board body 10 fixes the medium modules 20 in the array form, and ensures that the environment in which the medium modules 20 are located is consistent in the testing process. That is to say, the test conditions of all the medium modules 20 placed on the test board are consistent. In this way, the test environment of the camera module 30 carried by the medium module 20 can be ensured to be stable. For example, as shown in Fig.2, according to an embodiment of the present invention, the test board 10 may be placed with four medium modules 20, each of which is correspondingly connected to the camera module 30.

In the testing process, the medium module 20 may be removed from the board body 10 or may be re-placed to the board body 10. That is, the medium module 20 is detachable relative to the board body 10 in the overall testing process. The medium module 20 carries the camera module 10 and is removably placed on the board body 10 according to different needs. Then, in the testing process, the camera module 30 is not required to be removed, and the camera module 30 is operated by means of the medium module 20 so as to provide a certain protection for the camera module 30. Moreover, the medium module 20 is preferably fabricated from a rigid material, which is suitable for manipulation of the medium module 20 using a mechanical means. For example, after performing a performance test, if a camera module 30 carried by one of four medium modules 20 fails to pass the test, the corresponding medium module 20 is removed, and the failed camera module 30 is removed. Correspondingly, when a camera module 30 that has passed the test needs to be placed on the board body 10, the carried camera module 30 is also placed on the board body 10 by means of placing the medium module 20 on the board body 10. Of course, in addition to the removal and placement of any one of the medium modules 20 of the board body 10, the board body 10 also provides for the identification, positioning and other operations of any one of the medium modules 20. Therefore, the medium modules 20 are consistent with each other in the test environment in which they are located, and any one of the medium modules 20 may be operated separately. With the array arrangement, the medium modules 20 in the board body 10 can be conveniently found and located.

It is worth mentioning that the medium module 20 has a one-to-one correspondence with the camera module 30 in the testing process. The positions of the medium modules 20 in the board body 10 are different, and the board body 10 can ensure that each medium module 20 is at the same height or in the same time dimension. That is to say, the camera modules 30 are operated in batches by the medium modules 20 and the board body 10. In particular, for the test operation of the camera modules 30 in a batch, the medium modules 20 and the board body 10 can ensure the consistency and effectiveness of testing for each camera module 30. Moreover, a direct operation of the medium module 20 does not adversely affect the camera module 30. By the indirect operation of the corresponding medium module 20 by the board body 10, the camera module 30 can be tested more effectively. Preferably, for mechanized or automated test lines, both the medium module 20 and the board body 10 can emancipate the productive forces and reduce the production costs.

In particular, there are corresponding positioning structures in the board body 10 of the spliced test board, between the board body 10 and the medium modules 20, and between the medium modules 20 and the camera modules 30 to ensure the finding of the test board body 10, the medium modules 20 and the camera modules 30 in the flow transfer and test process. Preferably, each camera module 30 may be consistent with the medium module 20 in height, and each medium module 20 is consistent with the board body 10 in height, so that each camera module 30 has the same height in the test. Preferably, the position of each camera module 30 relative to the medium module 20 is determined, and the position of the medium module 20 relative to the board body 10 is determined, so that the position of the camera module 30 is determined relative to the test board.

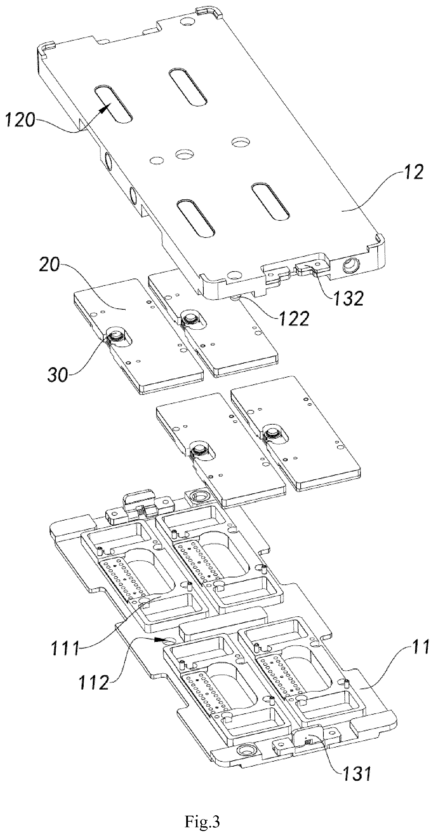

Fig. 3 is an exploded schematic view showing the spliced test board according to the embodiment of the present invention. As shown in Fig. 3, the board body 10 of the spliced test board specifically includes a support plate 11, and the support plate 11 is placed with medium modules 20, so that the medium modules 20 may be fixed in the board body 10 in a certain arrangement and the medium modules 20 are operated by means of the test board 10. The support plate 11 of the board body 10 is detachably connected to the medium modules 20, so that the medium modules 20 placed in the board body 10 can be in a consistent test environment. Preferably, each medium module 20 is detachably connected to the support plate 11, so that the medium module 20 is placed in or removed from the board body 10 as needed. The medium module 20 is preferably snapped and fastened to the support plate 11. The medium module 20 is preferably adapted to be adhered to the support plate 11 by a male/female structure. The medium module 20 is preferably adapted to be magnetically attracted to the support plate 11. The medium module 20 is preferably adapted to be connected to the support plate 11 by a post/hole structure. The board body 10 further includes a cover plate 12 and a snap-engaging assembly 13, wherein the cover plate 12 is detachably covered on the support plate 11 to protect the medium module 20 placed on the support plate 11, and wherein the snap-engaging assembly 13 is disposed on the support plate 11 and the cover plate 12 to detachably connect the cover plate 12 to the support plate 11. It will be apparent that when the medium module 20 is placed on the support plate 11, the snap-engaging assembly 13 fixes the cover plate 12 to the support plate 11, and then the medium module 20 cannot be removed from the board body 10. Correspondingly, when the medium module 20 needs to be removed from the board body 10, the snap-engaging assembly 13 is opened so that the cover plate 12 can be detached from the support plate 11, and thus the medium module 20 can be taken out.

Here, it can be understood by those skilled in the art that the board body 10 according to the embodiment of the present invention may also not include the above-mentioned cover plate 12. For example, in a case where the medium module 20 is directly fixed to the support plate 11, the board body 10 according to the embodiment of the present invention may include only a single support plate 11.

Moreover, although in the embodiment described above, the board body 10 in combination with the medium module 20 of the embodiment of the present invention is used as an example of embodiment, it can be understood by those skilled in the art that the spliced test board of the embodiment of the present invention where the board body 10 is used in combination with the medium module 20 may also be used separately. For example, the spliced test board may be directly connected to the camera module 30 without the medium module 20. In this way, by connecting a plurality of camera modules 30 on the spliced test board according to the embodiment of the present invention, the test of the optical performance of the camera modules 30 in a batch may also be achieved, thereby achieving an effect of improving the test efficiency. Alternatively, the spliced test board may be integrally molded and fabricated with the medium module 20 and the board body 10. Then, the camera module 30 may also be directly connected to the spliced test board for testing.

For example, in the absence of the medium module 20, all the pins of the camera module are led out, and the camera module is mounted in the board body 10 by using at least two layers of snap-fasteners. Since the contacted pins are relatively concentrated, a ribbon cable can be used to transfer the circuit of the camera module so as to access the testing device.

That is to say, the spliced test board according to the embodiment of the present invention can accommodate only the assembled camera module, only the medium module connected to the camera module, or both the camera module and the medium module. By means of the spliced test board, the camera module 30 can implement batch processing in all the tests, including the flow transfer process, reducing the time required for each camera module 30 to test, and improving the overall efficiency of the test.

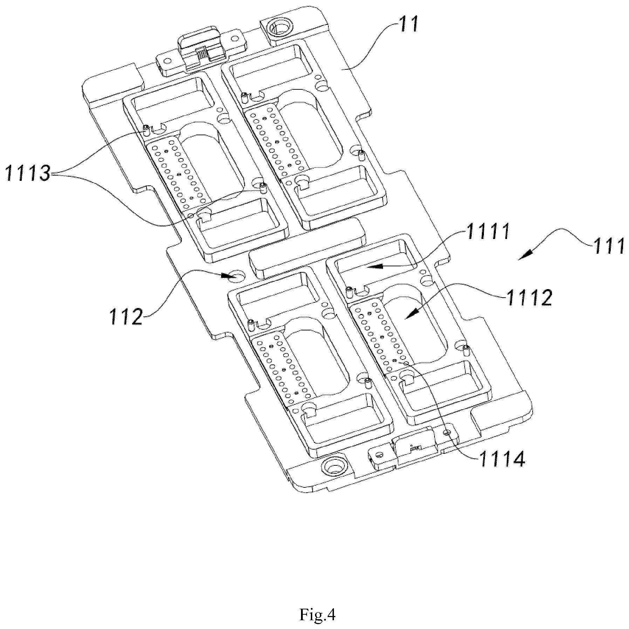

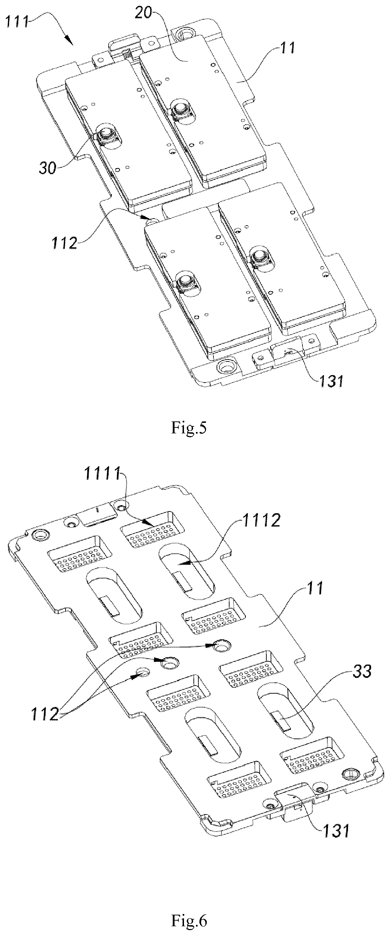

Hereinafter, the structure of the spliced test board according to the embodiment of the present invention will be further described in detail. Fig. 4 is a structural schematic view of a support plate of the spliced test board described above according to the embodiment of the present invention. Fig. 5 is a top view of the medium module disposed on the support plate according to the embodiment of the present invention. Fig. 6 is a bottom view of the medium module disposed on the support plate according to the embodiment of the present invention. As shown in Figs. 4 to 6, according to the embodiment of the present invention, the medium module 20 is placed in a 2×2 array form on the support plate 11 of the board body 10 of the spliced test board. Each medium module 20 is placed in a certain determined position. The support plate 11 provides at least one test position 111 where a medium module 20 is placed correspondingly, and then the camera module 30 carried by the medium module 20 is placed at a determined position. The support plate 11 of the spliced test board has four test positions 111 where four medium modules 20 may be placed correspondingly. The test position 111 further includes a test interface portion 1111, an identification portion 1112, a positioning portion 1113, and a placement portion 1114. It is worth mentioning that the structure of the test position 111 corresponds to the structure of the medium module 20. That is, in the present preferred embodiment, the interface 1111 is an interface through hole provided for the medium module 20, and the identification portion 1112 is a through hole for identifying the identity of the camera module 30 carried by the medium module 20, and the positioning portion 1113 is a positioning structure relative to the medium module 20, and the placement portion 1114 is a placement position of the camera module 30 corresponding to the medium module 20. It is worth mentioning that the structure of each test position 111 is consistent, which is convenient for the adaptive placement of the medium module 20. More specifically, the test interface portion 1111 is two symmetric through holes in the embodiment of the present invention, and the test interface portion 1111 allows the interface of the test device to be connected to the medium module 20. Of course, depending on the design of the medium module 20, the position and shape of the test interface portion 1111 need to be adjusted correspondingly. The identification portion 1112 is a position identified correspondingly to the carried camera module 30. In the embodiment of the present invention, the identification portion 1112 is a through hole that can identify the identity of the camera module 30. The identity of the camera module 30 may be identified by the identification portion 1112. Of course, the shape and form of the identification portion 1112 may be correspondingly adjusted according to the identification mode of the camera module 30. For example, when the identification code is required to be identified by scanning, the identification portion 1112 is a light-passing through hole, and when the RFID information is required to be identified, the identification portion 1112 may be an identified corresponding position. The positioning portion 1113 is a structure whose position relative to the medium module 20 is determined, so that the positions of the test interface portion 1111 and the identification portion 1112 relative to the support plate 11 are determined. The positions of each positioning portion 1113 and the medium module 20 are mutually determined, that is, it can be ensured that the positions of all the medium modules 20 relative to the support plate 11 are determined. This is advantageous for an increase in the efficiency of the test operation of the medium module 20. In the embodiment of the present invention, the medium module 20 is square, and the positioning portion 1113 is a positioning post in a diagonal direction with respect to the medium module 20. In other feasible embodiments, the positioning portion 1113 may specifically be a magnetic sheet, a snap-fastener pile or the like. The placement portion 1114 is a flexible sheet that is fixed to the test position 111 and provides a high degree of complement and buffer for the camera module 30 of the medium module 20. Of course, the design of the placement portion 1114 may also be adjusted according to the design of the medium module 20. Specifically, as shown in Figs. 5 and 6, the design of the test portion 111 corresponds to the design of the medium module 20, and the specific structure of each test portion 111 is mainly for satisfying the stability and energizing / galvanizing conditions of the medium module 20.

It should be noted that, in the embodiment of the present invention, the support plate 11 of the spliced test board has at least one calibration position 112, and the calibration position 112 is located at a central axis of the support plate 11. The calibration position 112 provides a calibration of the position of the support plate 11, that is, a specific position of the support plate 11 can be determined based on the calibration position 112. In addition, the cover plate 12 also has a calibration position 122 corresponding to the support plate 11, that is, the overall position of the board body 10 can be determined by means of mutual calibration of the calibration position 112 of the support plate 11 and the calibration position 122 of the cover plate 12. In addition, the cover plate 12 further provides at least one light-passing opening 120 to provide a light-passing condition for the test of the camera module 30. It can be understood by those skilled in the art that the light-passing opening 120 may be in one-to-one correspondence with the camera module 30, or may be provided as an opening arrangement in a one-to-plurality correspondence, which does not affect the technical features of the present invention.

When the medium module 20 is placed on the support plate 11 of the board body 10, the cover plate 12 covers the medium module 20 and fixes to the support plate 11. At this time, a snap-engaging assembly (not shown) fastens and fixes the cover plate 12 and the support plate 11 together, thereby fixing the position of each medium module 20. In the test process and the flow transfer, the board body 10 can stably fix each medium module 20, and the camera module 30 carried by each medium module 20 is in the same test environment. It is worth mentioning that the positions of each board body 10 and the medium module 20 between the board bodies 10 used in the test are relatively determined. The camera module 30 of the medium module 20 can find the medium module 20 of the board body 10 by looking for the board body 10.

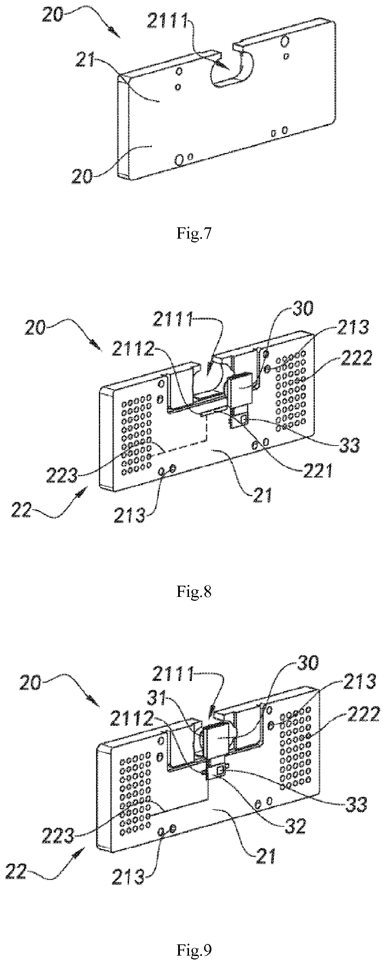

Hereinafter, the medium module in the embodiment of the present invention will be further described in detail. Fig. 7 is an overall schematic view of the medium module described above according to the embodiment of the present invention. Fig. 8 is an overall schematic view of a medium module connected to the camera module according to the embodiment of the present invention. Fig. 9 is another overall schematic view of the medium module connected to the camera module according to the embodiment of the present invention. As shown in Figs. 7 to 9, the medium module 20 specifically includes a substrate 21 and an expansion circuit 22, the expansion circuit 22 is pre-embedded in the substrate 21, and the substrate 21 is preferably integrally molded. The medium module 20 is adapted to be connected to the camera module 30. The camera module 30 is connected to the test device via the medium module 20 and is protected by the medium module 20. In the test process and the flow transfer, the operation of the camera module 30 is accomplished by the medium module 20. For convenience of explanation, a specific structure of the camera module 30 is shown here, mainly including a lens 31, a plug 32 and an identifier 33, wherein the identifier 33 is used for identifying the identity of the camera module 30. As shown in Fig. 8, the substrate 21 further includes a fixing position 211 adapted to connect and fix the camera module 30. More specifically, the fixing position 211 provides a lens slot 2111 for placing the lens 31 of the camera module 30. The fixing position 211 of the substrate 21 further includes a socket 2112 that can be tightly and closely connected to the plug 32 of the camera module 30. The camera module 30 can be stably fixed to the substrate 21 through the connection of the lens slot 2111 and the socket 2112. Moreover, the fixing position 211 has adaptability, in which different types of camera modules 30 can be placed and connected. In the embodiment of the present invention, the camera module 30 is a single-lens camera module, and the lens slot 2111 allows the lens 31 of the camera module 30 to be completely placed. The socket 2112 is also adapted to the plug 32 of the camera module 30. That is, in order to adapt to the camera module 30, the structure of the fixing position 211 is set accordingly. However, the fixing position 211 not only connects the camera module 30 to the substrate 21 but also simultaneously ensures that the camera module 30 is always operated through the medium module 20 in the test process and in the flow transfer. More specifically, each medium module 20 will correspond to the camera module 30 in the test process and in the flow transfer, and then the fixing position 211 can provide stability of the camera module 30 in terms of the structure and circuit connection. It is worth mentioning that in the embodiment of the present invention, the socket 2112 of the fixing position 211 takes the form of a connector, so that the camera module 30 is not easily dropped in operation. That is to say, by fixing of the fixing position 211, the camera module 30 will maintain a stable connection relationship with respect to the medium module 20.

More specifically, the expansion circuit 22 of the medium module 20 further includes a module interface 221, a test interface 222, and a trace 223 connected to the module interface 221 and the test interface 222. The module interface 221 and the test interface 222 are correspondingly connected by a trace 223. Preferably, the module interface 221 and the test interface 222 are connected to each other in a certain manner and a certain correspondence. The module interface 221 is built in the socket 2112 of the fixing position 211, so that when the plug 32 of the camera module 30 is connected to the socket 2112, the electric circuit of the camera module 30 is mutually connected with the expansion circuit 22. Further, the circuit of camera module 30 is connected to the expansion circuit 22 so that camera module 30 can be tested by means of the test interface 222 of the expansion circuit 22. That is to say, after the camera module 30 is connected to the expansion circuit 22, the test of the camera module 30 can be performed by means of the test interface 222 of the expansion circuit 22. Moreover, the test interface 222 provides a corresponding access port for the test device to test the camera module 30 carried by the medium module 20. In an embodiment of the invention, the test interface 222 is preferably disposed in a form of electrical contacts on the surface of the substrate 21 for electrically connecting the probes of the test device by means of contact. More preferably, the test interface 222 in the embodiment of the present invention takes a distributed arrangement manner, so that the test interface 222 can be contacted more stably and accurately. In an embodiment of the present invention, the test interface 222 is preferably symmetrically arranged on a surface of the substrate 21 in two parts. In other feasible modes, the test interface 222 may be a one-piece layout. Here, the layout manner of the test interface 222 is not limited in the embodiment of the present invention.

Further, the substrate 21 of the medium module 20 further includes at least one positioning member 213 which is disposed correspondingly to the positioning portion 1113 of the test position 111 of the support plate 11 of the board body 10. That is to say, the positioning member 213 of the medium module 20 and the positioning portion 1113 of the board body 10 are disposed correspondingly to each other so that the position of the medium module 20 relative to the board body 10 is determined. In the embodiment of the present invention, the medium module 20 is square, and the positioning member 213 is a positioning hole in a diagonal direction with respect to the medium module 20. In other feasible preferred embodiments, the positioning member 213 may specifically be a magnetic sheet, a snap-fastener pile or the like. It should be noted that the positioning member 213 and the positioning portion 1113 are disposed correspondingly to each other, that is, the positioning member 213 and the positioning portion 1113 are in pairs. When the positioning member 213 and the positioning portion 1113 are matched correspondingly to each other, the medium module 20 and the test position 111 of the board body 10 are mutually positioned. After each medium module 20 in the board body 10 and the positioning portion 1113 are mutually positioned by the positioning member 213, the medium module 20 is positioned with the board body 10. Then, it can be understood that when the camera module 30 and the medium module 20 are fixed to each other, and the medium module 20 and the board body 10 are mutually positioned, the position of each camera module 30 in the board body 10 can also be determined. Further, because the board body 10 can be positioned by a marking position 112, the relative position of the camera module 30 in the testing process can be determined. It can be understood that the positioning information of the camera module 30 at the respective position of the medium module 20 on the board body 10 is very important for the entire batch test.

With the spliced test board described above, and preferably, the medium module of the embodiment of the present invention, a plurality of camera modules can be tested simultaneously. In this way, after the test is completed, test data of a plurality of camera modules can be obtained. However, due to singularized storage of module information in the current camera module industry, the existing test data storage method generally uses single data storage for subsequent data acquisition calls, and there is a problem that data storage and reading operations are inefficient.

Therefore, according to another embodiment of the present invention, there is provided a module information storage method, the module information comprising test data of a plurality of camera modules arranged in a matrix form included in a spliced test board obtained by testing the plurality of camera modules, and the module information storage method comprises: generating a main container in an array form by associating identification information of a spliced test board with identification information of the main container; generating a plurality of sub-containers by associating identification information of each camera module with identification information of each sub-container; storing module information of each camera module in a corresponding sub-container; and inserting the respective sub-container into a corresponding position in the main container.

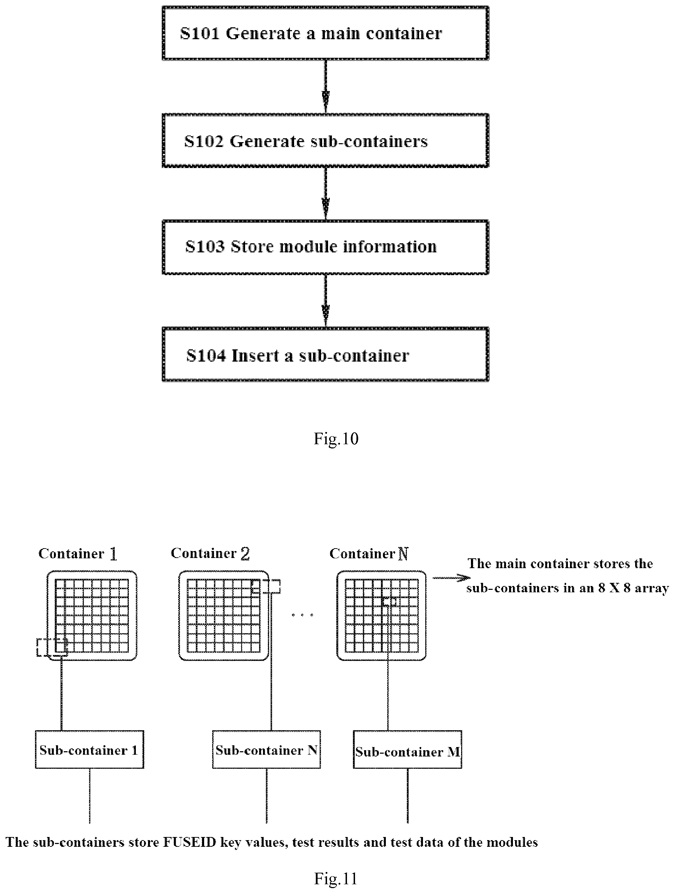

Fig.10 is a schematic flowchart of a module information storage method according to the embodiment of the present invention. As shown in Fig. 10, the module information storage method according to the embodiment of the present invention comprises: S101, generating a main container in an array form by associating identification information of a spliced test board with identification information of the main container; S102, generating a plurality of sub-containers by associating identification information of each camera module with identification information of each sub-container; S103, storing module information of each camera module in a corresponding sub-container; and S104, inserting the respective sub-container into a corresponding position in the main container. Herein, the module information described above includes test data of a plurality of camera modules included in a spliced test board obtained by testing the plurality of camera modules.

That is, the module information storage method according to an embodiment of the present invention corresponds to the aforementioned spliced test board including a plurality of camera modules arranged in a matrix form. Herein, the main container is associated with the spliced test board itself, and the sub-container is associated with each camera module. Moreover, the position of the sub-container relative to the main container corresponds to the position of the camera module associated thereto relative to the spliced test board. In this way, the module information of the camera module in the spliced test board can be stored by means of the main-container - sub-container architecture, thereby facilitating subsequent operations of data, such as reading and modification of data etc.

Moreover, since the main-container - sub-container storage architecture corresponds to the spliced-test-board - camera-module layout, positioning of information may be realized by the data storage structure, which is helpful to reduce manual intervention and realize automated testing of the camera modules.

With the module information storage method according to the embodiment of the present invention, efficient data storage can be realized, and the module information of the camera modules of the entire spliced test board can be searched and positioned in units of containers, thereby greatly reducing the personnel input, improving the production efficiency and reduce the misoperation of personnel.

Here, it can be understood by those skilled in the art that the spliced-test-board - camera-module matrix layout corresponds to the main-container - sub-container matrix storage architecture, but the matrices of the two do not need to be completely identical. That is to say, the number of rows and columns of the matrix of the main container may be different from the number of rows and columns of the matrix of the spliced test board. For example, the number of rows and columns of the matrix of the main container may be greater than the number of rows and columns of the matrix of the spliced test board, so that one main container can store the module information of a plurality of spliced test boards. Alternatively, the number of rows and columns of the matrix of the main container may also be smaller than the number of rows and columns of the matrix of the spliced test board, which generally corresponds to a case where the camera modules on one spliced test board are not all tested at one time but are partially tested.

As described above, since each spliced test board has unique identity identification, and unique encoding of the main container can be achieved by using the identification information of the spliced test board as the identification information of the main container. In this way, the module information of all the camera modules stored in the main container can be quickly obtained by means of the unique encoding of the main container. Specifically, a two-dimensional code may be printed on a lower surface of the support plate 11 of the above spliced test board, so that the two-dimensional code is used as the identity identification information of each spliced test board. When testing a plurality of camera modules accommodated by the spliced test board, the two-dimensional code can be used as a key value to generate a main container of M rows x N columns for each spliced board. Here, it can be understood by those skilled in the art that the rows and columns of the main container here preferably correspond to the rows and columns of the camera modules arranged in the spliced test board. For example, for a spliced test board having a 2 x 2 array as shown in Figs. 2 to 6, a main container of 2 rows and 2 columns may be generated.

A container in an array form is generated by associating identification information of the spliced test board with identification information of the main container. Since the main container corresponds to the spliced test board for the current testing, the identification information of the main container should uniquely correspond to the identification information of the spliced test board. For example, identity identification information such as a two-dimensional code of the spliced test board may be directly used as the identification information of the main container, so that the main container generates a MAP table of the main container according to the two-dimensional code as a key value, thereby storing the module information of the camera modules of the entire spliced test board.

Then, a plurality of sub-containers are generated by further associating identification information of each camera module with identification information of each sub-container. As described above, each camera module includes identity identification information for identifying the camera module itself, such as the identification 33 of the camera module 30 described above, whether it is placed in the spliced test board by means of the medium module described above, or directly placed in the spliced test board. It can be read directly from the camera module 30 or read from the camera module 30 by an identification portion 1112 on the medium module 20. Preferably, in the embodiment of the present invention, the FUSEID of the camera module is used as the identity identification information of the camera module. In this way, for each sub-container, the module information of each camera module, for example, including test results and other related data, is stored in the sub-container according to the FUSEID as a key value.

Here, it can be understood by those skilled in the art that although the two-dimensional code of the spliced test board and the FUSEID of the camera module are described above as an example, the identification information of the spliced test board and the camera module is not limited to the two-dimensional code and the FUSDID, and may also be other types of identification information, such as a barcode or the like, as long as it is only necessary to ensure that the identification information can uniquely identify the spliced test board and the camera module.

After the generation of the main container and the sub-containers is completed, a respective sub-container storing the module information of the camera module is inserted into the array of the main container. Here, it can be understood by those skilled in the art that the position in which the sub-container is inserted into the array of the main container should correspond to the position of the camera module corresponding to the test data stored in the sub-container in the spliced test board. For example, when a sub-container 1 is generated according to the FUSEID of the camera module at the M-th row and the 1^{st} column in the spliced test board as the key value, the sub-container 1 should be inserted into a position at the M-th row and the 1^{st} column in the main container. In this way, each sub-container in the main container can uniquely correspond to each camera module in the spliced test board, thereby facilitating data addition, deletion, modification and other operations, and improving the efficiency of adding, deleting, and modifying traceable data.

Therefore, in the module information storage method according to the embodiment of the present invention, the information of all the camera modules stored in the container can be quickly obtained according to the unique encoding of the container. That is, the two-dimensional code is used as the key value to generate and mark a main container of M rows x N columns for each spliced board, and M×N sub-containers are generated and marked according to the uniqueness of FUSEID of each camera module, then the module information including test results, test information and the like is dynamically inserted into each main container, and a position where each sub-container is located is identified so as to record its position.

In order to facilitate retrieval of data, in the module information storage method according to the embodiment of the present invention, establishing a mapping mechanism for the main container and the sub-container is further included. Specifically, by means of using a key value pair, a main container MAP tree is generated according to a unique two-dimensional code key value corresponding to each main container, then a sub-container MAP tree is generated by the module information including test results and other relevant test information according to the FUSEID as a key value, and each sub-container is inserted into a specified position according to the matrix position of the main container.

In this way, when the test data of the camera module needs to be retrieved, a index position of the main container MAP tree can be firstly positioned quickly by means of the key value of the main container of the two-dimensional code, and then a sub-container object corresponding to the main container is quickly retrieved according to the FUSEID key value, thereby obtaining the module information of the camera module.

Fig. 11 is a schematic view of a main-container - sub-container architecture according to the embodiment of the present invention. As shown in Fig. 11, a main container is generated according to the two-dimensional code of the spliced test board, wherein each main container has an 8 x 8 matrix to store the sub-containers. The sub-container 1, the sub-container N, and the sub-container M each store the module information including the test results and other test data with the FUSEID of the corresponding camera module as the key value.

In a specific operation process, the main container generates a MAP table of the main container according to the two-dimensional code as the key value, and stores the module information of the entire spliced test board. The sub-container stores the FUSEID, test results and other test data of the camera module according to the FUSEID as the key value, and is inserted into the main container MAP table of the corresponding 8×8 matrix, and a position where each sub-container is located is identified. In this way, when it is necessary to obtain the module information of the camera module, a position under the main container MAP tree is found by positioning the two-dimensional code, finding a current main container object such as a container A, then a position where a sub-container belonging to the main container is located is found according to the FUSEID of the camera module, finding a sub-container object such as a sub-container 1, and then the module information thereof is obtained.

In summary, the module information storage method according to the embodiment of the present invention provides a storage format of the module information of the camera modules, which includes marking the container and the sub-container with a unique code, and generating a mapping table of the container and the sub-container.

Therefore, according to still another embodiment of the present invention, there is provided a module information retrieval method comprising: finding a corresponding position in a main container mapping table according to identification information of a spliced test board, wherein the identification information of the spliced test board is associated with identification information of the main container; finding a position where a sub-container belonging to the main container is located according to identification information of a camera module so as to locate the sub-container, wherein the identification information of the camera module is associated with identification information of the sub-container; and obtaining module information of the corresponding camera module from the sub-container, wherein the module information includes module information of the corresponding camera module among module information of the plurality of camera modes included in the spliced test board obtained by testing the plurality of camera modules.

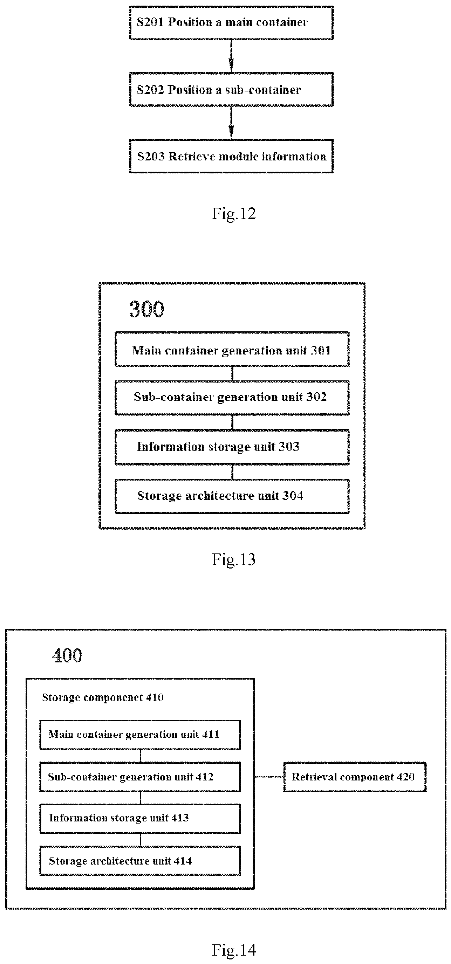

Fig.12 is a schematic flowchart of a module information retrieval method according to the embodiment of the present invention. As shown in Fig. 12, the module information retrieval method according to the embodiment of the present invention comprises: S201, finding a corresponding position in a main container mapping table according to identification information of a spliced test board, wherein the identification information of the spliced test board is associated with identification information of the main container; S202, finding a position where a sub-container belonging to the main container is located according to identification information of a camera module so as to locate the sub-container; and S203, obtaining module information of the corresponding camera module from the sub-container, wherein the module information includes module information of the corresponding camera module among module information of the plurality of camera modes included in the spliced test board obtained by testing the plurality of camera modules.

Here, it can be understood by those skilled in the art that the module information retrieval method according to the embodiment of the present invention corresponds to the storage format of the module information of the camera module described above. That is to say, the module information retrieval method is a data retrieval method proposed by adapting to the storage format of the module information described above, and therefore, corresponding details are also the same as those in the module information storage method described above, and are not described again in order to avoid redundancy.

Furthermore, it can also be understood by those skilled in the art that the module information storage method and the module information retrieval method according to the embodiments of the present invention do not necessarily correspond to the aforementioned spliced test board structure shown in Figs. 2 to 6, and the module information storage method and the module information retrieval method according to the embodiments of the present invention are applicable as long as the simultaneous testing of the plurality of camera modules can be realized by the spliced test board. Moreover, the simultaneous testing of the plurality of camera modules is not limited to the simultaneous testing of all the camera modules on the entire spliced test board, or may be the simultaneous testing of some of the camera modules on the entire spliced test board. Furthermore, the simultaneous testing is not limited to testing the plurality of camera modules at a same time point. For example, the plurality of camera modules may be sequentially tested according to the order of the light source scanning to obtain corresponding test results, and this case is also included in the embodiment of the present invention.

The module information storage method and the module information retrieval method according to the embodiments of the present invention can realize storage and retrieval of data of the batch test of the camera modules, thereby reducing the personnel input, improving the production efficiency, and reducing the misoperation of personnel.

According to further another embodiment of the present invention, there is provided a module information storage apparatus, the module information comprising test data of a plurality of camera modules arranged in a matrix form included in a spliced test board obtained by testing the plurality of camera modules, the module information storage apparatus comprising: a main container generation unit for generating a main container in an array form by associating identification information of the spliced test board with identification information of the main container; a sub-container generation unit for generating a plurality of sub-containers by associating identification information of each camera module with identification information of each sub-container; an information storage unit for storing module information of each camera module in a corresponding sub-container; and a storage architecture unit for inserting the respective sub-container into a corresponding position in the main container.

Fig. 13 is a schematic block diagram of a module information storage apparatus according to the embodiment of the present invention. As shown in Fig. 13, the module information storage apparatus 300 according to the embodiment of the present invention comprises: a main container generation unit 301 for generating a main container in an array form by associating identification information of the spliced test board with identification information of the main container; a sub-container generation unit 302 for generating a plurality of sub-containers by associating identification information of each camera module with identification information of each sub-container; an information storage unit 303 for storing module information of each camera module in a corresponding sub-container generated by the sub-container generation unit 302; and a storage architecture unit 304 for inserting the sub-container storing the module information therein by the information storage unit 303 into a corresponding position in the main container generated by the main container generation unit 301. Herein, the module information includes test data of a plurality of camera modules arranged in a matrix form included in a spliced test board obtained by testing the plurality of camera modules.

In the module information storage apparatus described above, the identification information of the spliced test board is a two-dimensional code of the spliced test board.

In the module information storage apparatus described above, the identification information of the camera module is a FUSEID of the camera module.

In the module information storage apparatus described above, the module information comprises a FUSEID, a test result, and test data of the camera module.

The module information storage apparatus described above further comprises a mapping establishment unit, and the mapping establishment unit is specifically used for: generating a main container mapping table according to the unique identification information of the main container as a key value by using a key value pair; generating a sub-container mapping table according to the unique identification information of the camera module as a key value; and inserting each sub-container to a specified position according to a matrix position of the main container.

Here, it can be understood by those skilled in the art that other details of the module information storage apparatus according to the embodiment of the present invention are completely the same as the corresponding details previously described with respect to the module information storage method according to the embodiment of the present invention, and therefore they are not described again so as to avoid redundancy.

According to still further another embodiment of the present invention, there is provided a test device for obtaining test data of a plurality of camera modules arranged in a matrix form included in a spliced test board, obtained by testing the plurality of camera modules, the test device comprising a storage component for storing module information of the camera module and a retrieval component for retrieving the module information of the camera module. The storage component comprises: a main container generation unit for generating a main container in an array form by associating identification information of the spliced test board with identification information of the main container; a sub-container generation unit for generating a plurality of sub-containers by associating identification information of each camera module with identification information of each sub-container; an information storage unit for storing module information of each camera module in a corresponding sub-container; and a storage architecture unit for inserting the respective sub-container into a corresponding position in the main container. Moreover, the retrieval component is specifically used for: finding a corresponding position in a main container mapping table according to identification information of a spliced test board, wherein the identification information of the spliced test board is associated with identification information of the main container; finding a position where a sub-container belonging to the main container is located according to identification information of a camera module so as to locate the sub-container, wherein the identification information of the camera module is associated with identification information of the sub-container; and obtaining module information of the corresponding camera module from the sub-container, wherein the module information includes module information of the corresponding camera module among module information of the plurality of camera modes included in the spliced test board obtained by testing the plurality of camera modules.

Fig. 14 is a schematic block diagram of a test device according to the embodiment of the present invention. As shown in Fig. 14, the test device 400 according to the embodiment of the present invention obtains test data of a plurality of camera modules arranged in a matrix form included in a spliced test board, by testing the plurality of camera modules, and includes: a storage component 410 for storing module information of the camera module and a retrieval component 420 for retrieving the module information of the camera module. Herein, the storage component 410 includes: a main container generation unit 411 for generating a main container in an array form by associating identification information of the spliced test board with identification information of the main container; a sub-container generation unit 412 for generating a plurality of sub-containers by associating identification information of each camera module with identification information of each sub-container; an information storage unit 413 for storing module information of each camera module in a corresponding sub-container generated by the sub-container generation unit 412; and a storage architecture unit 414 for inserting the respective sub-container storing the module information therein by the information storage unit 413 into a corresponding position in the main container generated by the main container generation unit 411. Herein, the module information includes test data of a plurality of camera modules arranged in a matrix form included in a spliced test board obtained by testing the plurality of camera modules.

Here, it can be understood by those skilled in the art that although in the above-described example, the test device includes both the storage component and the retrieval component, it may also include only one of the storage component and the retrieval component. That is to say, the storage component or the retrieval component in the above-described test device may also exist in a separate form.

In addition, it can be understood by those skilled in the art that although the test device 400 including the storage component 410 and the retrieval component 420 is shown in Fig. 14, the test device 400 may also include some components not shown in Fig. 14. For example, in order to test the camera module, the test device 400 should include a light source, an object such as a mark plate imaged by the camera module, and other components.

In the test device described above, the storage component further comprises a mapping establishment unit, and the mapping establishment unit is specifically used for: generating a main container mapping table according to the unique identification information of the main container as a key value by using a key value pair; generating a sub-container mapping table according to the unique identification information of the camera module as a key value; and inserting each sub-container to a specified position according to a matrix position of the main container; wherein the retrieval component retrieves the module information based on a mapping table established by the mapping establishment unit.

Moreover, it can be understood by those skilled in the art that other details of the test device according to the embodiment of the present invention are completely the same as the corresponding details previously described with respect to the module information storage method and the module information retrieval method according to the embodiments of the present invention, and therefore they are not described again so as to avoid redundancy.

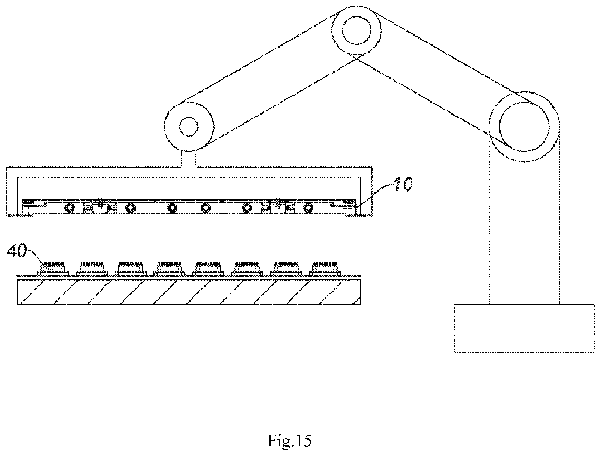

Fig. 15 is a schematic diagram of testing a camera module disposed on a spliced test board by the test device according to the embodiment of the present invention. As shown in Fig. 15, the test device has a test circuit 40 that is adapted to the board body 10. The test device is connected to the medium modules 20 of the board body 10 via the test circuit 40, so that the plurality of medium modules 20 placed in the board body 10 are simultaneously connected to each other, and the camera modules 30 carried by the medium modules 20 are simultaneously tested. In addition, the connection between the medium module 20 and the camera module 30 is one-to-one. That is to say, the camera module 30 may complete all test operations by the medium module 20 without having to repeatedly access and remove with respect to the medium module 20. For example, the camera module 30 to be tested is connected and fixed to the medium module 20 before starting a test operation. The medium module 20 will carry the camera module 30 to perform all of the tests. The medium module 20 will always be connected to the camera module 30 regardless of whether the camera module 30 passes the tests or not. That is to say, for the camera module 30 that has not passed a test, the medium module 20 may also assist the camera module 30 in performing corresponding operations without passing the test. For the camera module 30 that passes the test, the medium module 20 will also accompany the camera module 30 to complete other tests. Also, because the medium module 20 provides an adapted test interface, the test circuit 40 only needs a corresponding interface so that the medium module 20 can perform different performance test items. By means of the medium module 20, the camera module 30 can avoid repeated access and removal during all of the tests, including the flow transfer process, thereby reducing the time required for each camera module 30 to test, improving the overall efficiency of the test, and adapting for the batch test of the camera modules 30.

The module information storage method, the module information retrieval method, the module information storage apparatus, and the test device according to the embodiments of the present invention can realize storage and retrieval of data of the batch test of the camera modules, thereby reducing the personnel input, improving the production efficiency, and reducing the misoperation of personnel.

It should be understood by those skilled in the art that the embodiments of the present invention described in the above description and the accompanying drawings are only exemplary and not to limit the present invention. The objects of the present invention have been achieved completely and efficiently. The function and structural principles of the present invention have been illustrated and described in the embodiments, and the embodiments of the present invention may be varied or modified without departing from the principles.

## Claims

1. A module information storage method, the module information comprising test data of a plurality of camera modules arranged in a matrix form included in a spliced test board obtained by testing the plurality of camera modules, the module information storage method comprising:
generating a main container in an array form by associating identification information of the spliced test board with identification information of the main container;
generating a plurality of sub-containers by associating identification information of each camera module with identification information of each sub-container;
storing module information of each camera module in a corresponding sub-container; and
inserting the respective sub-container into a corresponding position in the main container.

2. The module information storage method according to claim 1, **characterized in that** the identification information of the spliced test board is a two-dimensional code of the spliced test board.

3. The module information storage method according to claim 1, **characterized in that** the identification information of the camera module is a FUSEID of the camera module.

4. The module information storage method according to claim 1, **characterized in that** the module information comprises a FUSEID, a test result, and test data of the camera module.

5. The module information storage method according to claim 1, **characterized in that** it further comprises:
generating a main container mapping table according to the unique identification information of the main container as a key value by using a key value pair;
generating a sub-container mapping table according to the unique identification information of the camera module as a key value; and
inserting each sub-container to a specified position according to a matrix position of the main container.

6. A module information retrieval method, comprising:
finding a corresponding position in a main container mapping table according to identification information of a spliced test board, wherein the identification information of the spliced test board is associated with identification information of the main container;
finding a position where a sub-container belonging to the main container is located according to identification information of a camera module so as to locate the sub-container, wherein the identification information of the camera module is associated with identification information of the sub-container; and
obtaining module information of the corresponding camera module from the sub-container, wherein the module information includes module information of the corresponding camera module among module information of a plurality of camera modes arranged in a matrix form included in a spliced test board obtained by testing the plurality of camera modules.

7. The module information retrieval method according to claim 6, **characterized in that** the identification information of the spliced test board is a two-dimensional code of the spliced test board.

8. The module information retrieval method according to claim 6, **characterized in that** the identification information of the camera module is a FUSEID of the camera module.

9. A module information storage apparatus, the module information comprising test data of a plurality of camera modules arranged in a matrix form included in a spliced test board obtained by testing the plurality of camera modules, the module information storage apparatus comprising:
a main container generation unit for generating a main container in an array form by associating identification information of the spliced test board with identification information of the main container;
a sub-container generation unit for generating a plurality of sub-containers by associating identification information of each camera module with identification information of each sub-container;
an information storage unit for storing module information of each camera module in a corresponding sub-container; and
a storage architecture unit for inserting the respective sub-container into a corresponding position in the main container.

10. The module information storage apparatus according to claim 9, **characterized in that** the identification information of the spliced test board is a two-dimensional code of the spliced test board.

11. The module information storage apparatus according to claim 9, **characterized in that** the identification information of the camera module is a FUSEID of the camera module.

12. The module information storage apparatus according to claim 9, **characterized in that** the module information comprises a FUSEID, a test result, and test data of the camera module.

13. The module information storage apparatus according to claim 9, **characterized in that** it further comprises:
a mapping establishment unit, specifically for:
generating a main container mapping table according to the unique identification information of the main container as a key value by using a key value pair;
generating a sub-container mapping table according to the unique identification information of the camera module as a key value; and
inserting each sub-container to a specified position according to a matrix position of the main container.

14. A test device for obtaining test data of a plurality of camera modules arranged in a matrix form included in a spliced test board obtained by testing the plurality of camera modules, comprising:
a storage component for storing module information of the camera module, comprising:
a main container generation unit for generating a main container in an array form by associating identification information of the spliced test board with identification information of the main container;
a sub-container generation unit for generating a plurality of sub-containers by associating identification information of each camera module with identification information of each sub-container;
an information storage unit for storing module information of each camera module in a corresponding sub-container; and
a storage architecture unit for inserting the respective sub-container into a corresponding position in the main container;
a retrieval component for retrieving the module information, specifically for:
finding a corresponding position in a main container mapping table according to identification information of a spliced test board, wherein the identification information of the spliced test board is associated with identification information of the main container;
finding a position where a sub-container belonging to the main container is located according to identification information of a camera module so as to locate the sub-container, wherein the identification information of the camera module is associated with identification information of the sub-container; and
obtaining module information of the corresponding camera module from the sub-container, wherein the module information includes module information of the corresponding camera module among module information of the plurality of camera modes arranged in the matrix form included in the spliced test board obtained by testing the plurality of camera modules.

15. The test device according to claim 14, **characterized in that** the storage component further comprises:
a mapping establishment unit, specifically for:
generating a main container mapping table according to the unique identification information of the main container as a key value by using a key value pair;
generating a sub-container mapping table according to the unique identification information of the camera module as a key value; and
inserting each sub-container to a specified position according to a matrix position of the main container;
wherein the retrieval component retrieves the module information based on a mapping table established by the mapping establishment unit.
